(19) **Europäisches Patentamt**

**European Patent Office**

**Office européen des brevets**

(11) **EP 0 957 121 B1**

(12) **EUROPÄISCHE PATENTSCHRIFT**

(45) Veröffentlichungstag und Bekanntmachung des Hinweises auf die Patenterteilung:
**04.02.2004 Patentblatt 2004/06**

(51) Int Cl.⁷: **C08G 59/40**, C08G 18/32

(21) Anmeldenummer: **99108940.0**

(22) Anmeldetag: **05.05.1999**

(54) **Verkappte Amine als Härter für wasserverdünnbare Einkomponenten (1K)-Epoxidharzsysteme**

Blocked amines as curing agent for aqueous epoxy one component resin compositions

Des amines bloquées pour des compositions à un composant de résines époxydes aqueuses

(84) Benannte Vertragsstaaten:
**AT CH DE FR IT LI NL**

(30) Priorität: **12.05.1998 AT 80298**

(43) Veröffentlichungstag der Anmeldung:
**17.11.1999 Patentblatt 1999/46**

(73) Patentinhaber: **Surface Specialties Austria GmbH**
**8402 Werndorf (AT)**

(72) Erfinder:
• **Feola, Roland Dr.**
**8045 Graz (AT)**
• **Müller, Friedrich**
**8053 Graz (AT)**
• **Gmoser, Johann**
**8045 Graz (AT)**

(74) Vertreter: **Deckers, Hellmuth, Dr.**
**European Patent Attorney,**
**Bahnhofstrasse 26/A**
**55218 Ingelheim (DE)**

(56) Entgegenhaltungen:
**EP-A- 0 661 328**      **EP-A- 0 816 453**
**WO-A-98/58004**      **DE-A- 19 628 309**
**US-A- 4 699 937**

## EP 0 957 121 B1

**Beschreibung**

Wasserverdünnbare zweikomponentige Epoxidharzsysteme, welche bei Umgebungstemperatur aushärten, haben in der Praxis einen technischen Stand erreicht, der hinsichtlich der geforderten Eigenschaften wie Substrathaftung, Oberflächenqualität und Beständigkeit durchaus an konventionelle Epoxidharzsysteme herankommen.

Aus Gründen der Bequemlichkeit und der Verarbeitungssicherheit ging man daran, einkomponentige Epoxidharzsysteme mit latenter Härtung zu entwickeln, die aus einer Kombination von Ketiminen und Epoxidharzen bestehen. Die Vorteile dieser 1K-Systeme liegen auf der Hand: Härter und Epoxidharz liegen dem Anwender schon im richtigen Mischungsverhältnis vor; die Gefahr, nicht das richtige Mischungsverhältnis einzustellen, fällt weg. Die Härtung erfolgt bei konventionellen Systemen unter Spaltung der Ketimine durch Luftfeuchtigkeit. Bei wasserverdünnbaren Systemen wird bevorzugt eine definierte Menge an Wasser zugegeben, wodurch man in der Aushärtungszeit nicht mehr von der gegebenen Luftfeuchtigkeit abhängig ist, außerdem kommt es auf diese Art über die gesamte Filmdicke zu einer gleichmäßigen Aushärtung, was sich positiv auf die Eigenschaften des ausgehärteten Lackfilms auswirkt.

Konventionelle 1K-Systeme sind schon seit längerem bekannt und beschrieben, so z. B. in folgenden Patentschriften: US-A 3,442,856, US-A 3,919,317, US-A 4,148,950, US-A 4,391,958 und US-A 4,748,083 sowie WO-A 92/18575.

Wasserverdünnbare 1K-Systeme mit latenter Härtung werden in WO-A 98/02478 beschrieben. Dabei wird ein wasserverdünnbares, flüssiges Epoxidharz mit ketonblockierten Aminen, sogenannten Ketiminen, kombiniert. Bei Zugabe von Wasser wird das Ketimin zersetzt, der aminische Härter wird regeneriert und steht zur Härtung zur Verfügung. Da das System wasseremulgierbar ist, entsteht ein wäßriges Bindemittel, dessen Verarbeitung und Eigenschaften dem Anwender über die zweikomponentigen, wäßrigen Systeme bekannt sind. Dieses Bindemittel gestattet dem Verbraucher eine leichtere Verarbeitung, da das Bindemittel schon gebrauchsfertig im richtigen Verhältnis von Härter zu Epoxidharz vorliegt. Die Härtungsreaktion wird bei Zugabe von Wasser gestartet, dabei muß zum Erreichen der optimalen Eigenschaften der Beschichtung nur eine Mindestmenge an Wasser zugegeben werden.

Als geeignete Amine, die mit Ketonen zu Ketiminen umgesetzt werden, werden aliphatische lineare, verzweigte oder cyclische Amine mit mindestens zwei primären Aminogruppen, primäre Polyoxyalkylendiamine, teilweise oder vollständig hydrierte Kondensationsprodukte von Anilin oder dessen Derivaten sowie Polyamidoamine mit mindestens zwei endständigen primären Aminogruppen aus aliphatischen linearen, verzweigten oder cyclischen Aminen mit mindestens zwei primären Aminogruppen und Dicarbonsäuren genannt.

Diese Amine haben jedoch Nachteile. So ergeben niedrigmolekulare diprimäre Amine in Verbindung mit wasserverdünnbaren Epoxidharzen nach der Aushärtung kaum die geforderten Eigenschaften wie gute Oberflächenqualität und ein ausgewogenes Verhältnis von Filmhärte zu Filmflexibilität. Polyoxyalkylendiamine sind zwar höhermolekular aufgebaut, ergeben aber durch ihren aliphatischen und polaren Charakter nur unzureichend wasserbeständige Filme. Kondensationsprodukte von Anilinderivaten sind, auch wenn sie vollständig hydriert sind, bei Umgebungstemperatur wenig reaktiv, was eine lange Aushärtungszeit bedeutet.

Nicht - oder nur teilweise hydrierte Produkte sind außerdem toxikologisch bedenklich. Zur Ketiminverkappung geeignete Aminhärter sollten ausschließlich primäre Aminogruppen beinhalten, denn nur solche lassen sich leicht mit Ketonen unter Wasserabspaltung umsetzten. Eine Umsetzung von sekundären Aminen mit Ketonen zu Enaminen verläuft weniger glatt, es würde ein Rest an unblockierten Aminen übrigbleiben und die Lagerstabilität des 1K-Systems stark verschlechtern. Aus diesem Grund sind Epoxid-Amin-Addukte und Mannichbasen zur Ketiminverkappung wenig geeignet.

Polyamidoamine erfüllen die Voraussetzung, daß sie nur primäre Aminogruppen enthalten, andererseits aber auch den gewünschten Polymeraufbau besitzen. Ein Nachteil der wenig polaren Polyamidoamine ist deren schlechte Verträglichkeit mit den wasserverdünnbaren Epoxidharzen. Das trifft vor allem dann zu, wenn die verwendete Dicarbonsäure langkettig ist (10 oder mehr Kohlenstoffatome in der Kette). Polyamidoamine auf Basis kurzkettiger Dicarbonsäuren sind hingegen oft kristalline, hochschmelzende Körper und damit schwer zu verarbeiten.

Eine schlechte Verträglichkeit von Ketiminen auf Basis von Polyamidoaminen mit wasserverdünnbaren Systemen macht sich dem Anwender vor allem durch Oberflächenstörungen und trübe Klarlackfilme in den ausgehärteten Systemen bemerkbar. Das Problem kann zwar durch Zugabe von geeigneten Lösungsmitteln verringert werden, was aber die Lösungsmittelbilanz des Systems verschlechtert. Die Vorteile eines wäßrigen 1K-Systems gehen damit wieder teilweise verloren.

Es wurde nun gefunden, daß man zur Ketiminverkappung geeignete Aminhärter, welche in idealer Weise einen höhermolekularen Aufbau und eine gute Verträglichkeit mit wasserverdünnbaren Epoxidharzen in sich vereinigen, auf einfache Weise herstellen kann, indem man Amine **A** mit mindestens zwei primären Aminogruppen in einer ersten Reaktionsstufe anteilsweise mit einem Alkylencarbonat **B**, bevorzugt einem $\alpha,\omega$-Alkylencarbonat, zu Hydroxyalkylurethanen umsetzt, die noch freigebliebenen primären Aminogruppen anschließend mit aliphatischen Carbonylverbindungen **C** zu Ketiminen reagiert und in einer nachfolgenden Reaktionsstufe jeweils mindestens zwei Moleküle dieses Vorprodukts über die bei der Umsetzung mit Alkylencarbonat entstandenen, bevorzugt primären OH-Gruppen mit geeigneten mehrfunktionellen, OH-reaktiven Verbindungen D verknüpft.

Die Erfindung betrifft daher verkappte Aminhärter für Epoxidharze, die Umsetzungsprodukte sind von Aminen **A** mit mindestens zwei primären Aminogruppen, cyclischen Alkylencarbonaten **B**, aliphatischen Carbonylverbindungen **C** und Verbindungen **D** mit mindestens zwei mit Hydroxylgruppen reagierenden Gruppen, wobei im ersten Schritt je 1 mol des Amins **A** 0,1 bis 1 mol der primären Aminogruppen durch Reaktion mit den cyclischen Alkylencarbonaten **B** zu Hydroxyalkylurethan-Gruppen umgewandelt werden, die verbliebenen primären Aminogruppen im zweiten Schritt durch Reaktion mit den aliphatischen Carbonylverbindungen **C** zu Ketimin- oder Aldimin-Gruppen umgewandelt werden und anschließend im dritten Schritt mindestens zwei der aus **A, B** und **C** gebildeten Moleküle über die Hydroxylgruppen der Hydroxyalkylurethan-Gruppierung durch Reaktion mit der Verbindung **D** verknüpft werden.

Die Amine **A** sind ausgewählt aus aliphatischen linearen, verzweigten und cyclischen und gemischt aliphatisch-aromatischen Aminen mit mindestens zwei primären Aminogruppen. Bevorzugt werden Diamine, und besonders bevorzugt solche Diamine, die keine weiteren sekundären Aminogruppen enthalten. Beispiele für besonders geeignete Amine sind: Äthylendiamin, 2,2,4- und 2,4,4-Trimethylhexamethylendiamin, Neopentandiamin, 2-Methyl-1,5-pentandiamin, 1,3-Diaminopentan, Hexamethylendiamin, sowie cycloaliphatische Amine wie 1,2- bzw. 1,3-Diaminocyclohexan, 1,4-Diamino-3,6-dimethylcyclohexan, 1,2-Diamino-4-äthylcyclohexan, 1,4-Diamino-3,6-diäthylcyclohexan, 1-Cyclohexyl-3,4-diaminocyclohexan, Isophorondiamin und Umsetzungsprodukte davon, Bis(4-aminocyclohexyl)-methan und -propan, 3,3'-Dimethyl-4,4'-diaminodicyclohexylmethan, 1,3- und 1,4-Bis-(aminomethyl)-cyclohexan, sowie aromatische Amine mit aliphatisch gebundenen Aminogruppen wie 1,3- und 1,4-Bis(aminomethyl)-benzol. Besonders bevorzugt unter diesen werden Äthylendiamin, Hexamethylendiamin, 1,2-Diaminocyclohexan, Isophorondiamin, Bis (4-aminocyclohexyl)-methan sowie 1,3-Bis(aminomethyl)-benzol (m-Xylylendiamin).

Die cyclischen Alkylencarbonate **B** sind Ester der Kohlensäure mit aliphatischen Diolen, beispielsweise 2-Oxo-1,3-dioxolane, die gegebenenfalls in der 4- und 5-Stellung durch Alkylreste mit insbesondere 1 bis 4 Kohlenstoffatomen substituiert sein können, 2-Oxo-1,3-dioxane und 2-Oxo-1,3-dioxepane, die gleichfalls an den Kohlenstoffatomen im Ring substituiert sein können. Geeignete Verbindungen sind vor allem cyclische Carbonate abgeleitet von Diolen wie Äthylenglykol, 1,3- oder 1,2-Propylenglykol sowie Butandiol-1,4, insbesondere Äthylencarbonat und 1,3-Propylencarbonat. Mindestens die Hälfte der Stoffmenge dieser Alkylencarbonate ist vorzugsweise von einem $\alpha$, $\omega$-Dihydroxyalkan abgeleitet, damit eine ausreichende Anzahl an primären Hydroxylgruppen bei der Addition des Alkylencarbonats B an das Amin A entsteht.

Der Anteil der Aminogruppen, den man vor der Ketiminisierung mit dem Alkylencarbonat **B** umsetzt, ist im Prinzip frei wählbar und hängt davon ab, in welchem Ausmaß man das Ketimin anschließend weiter kettenverlängern möchte.

Es hat sich als günstig erwiesen, pro 1 mol des Amins **A** 0,1 bis 1,0 mol der Aminogruppen mit Alkylencarbonat **B** umzusetzen. Bevorzugt werden 0,2 bis 0,95 mol, und besonders bevorzugt 0,3 bis 0,9 mol des Alkylencarbonats **B** mit 1 mol des Amins umgesetzt. Dazu läßt man Alkylencarbonat zum vorgelegten Amin unter Rühren zulaufen. Die Reaktionsfreudigkeit ist von der Art des Amins abhängig. Oft startet die Reaktion schon am Beginn der Zugabe bei Umgebungstemperatur, manchmal ist leichtes Erwärmen (bis ca. 50 °C) notwendig. Die Reaktion verläuft exotherm, so daß später gekühlt werden muß. Man hält nach Ende der Zugabe auf 50 bis 60 °C so lange, bis die theoretische Aminzahl erreicht ist.

Zur weiteren Umsetzung zur Iminoverbindung (Ketimin oder Aldimin) wird dem Ansatz eine lineare, verzweigte oder cyclische aliphatische Carbonylverbindung C mit 3 bis 18 Kohlenstoffatomen, bevorzugt ein Keton, zugesetzt. Die Carbonylverbindung C ist bevorzugt ein aliphatisches Keton mit 3 bis 12 Kohlenstoffatomen. Beispiele für Ketone, die mit den oben genannten Aminen zu Ketiminen umgesetzt werden, sind: Aceton, Butanon, 2-Pentanon, 3-Pentanon, 4-Methyl-2-pentanon, Cyclopentanon, Cyclohexanon, 2-Methylcyclohexanon, Isopropylmethylketon, Äthylisopropylketon, 2-Hexanon, 3-Hexanon, 2-Heptanon, 3-Heptanon, 4-Heptanon, 2-Octanon, 3-Octanon, 4-Octanon, Diisopropylketon, Diisobutylketon, 5-Äthylnonanon-2, Methylisobutylketon und Methylisoamylketon. Die Herstellung von Ketiminen ist seit langem bekannt und beschrieben. Neuere Herstellungsvorschriften finden sich in den oben genannten Patentschriften und in US-A 4,391,958, DE-A 33 25 061, DE-A 34 44 110, EP-A 0 240 083, sowie in der Veröffentlichung von Yang, C.-P., Lee, L.-T., Journal of Polymer Science, Part A, Vol. 28, S. 1861.

Zur möglichst vollständigen Umsetzung aller noch freien primären Aminogruppen wird ein bis zu 100 %iger stöchiometrischer Überschuß an Carbonylverbindung eingesetzt. Nach Zusatz eines geeigneten Schleppmittels und eines Katalysators wird unter Auskreisen von Wasser unter Rückfluß erhitzt, bis mindestens die theoretische Wassermenge ausgetragen wurde. Idealerweise wird bis zu 110 % der theoretischen Wassermenge abdestilliert, um der als Nebenreaktion ablaufenden Aldolkondensation Rechnung zu tragen. Danach wird das Schleppmittel und die überschüssige Carbonylverbindung im Vakuum abgezogen.

Als mehrfunktionelle, OH-reaktive Verbindungen **D** eignen sich besonders Epoxidverbindungen mit mindestens zwei Oxirangruppen und Isocyanate mit mindestens zwei Isocyanatgruppen. Geeignet sind beispielsweise die Diglycidyläther von Bisphenol **A** und Bisphenol **F**, Resorcin, Butandiol-1,4 und Hexandiol-1,6 sowie Polypropylenglykol, Diglycidylester von Tetrahydro- und Hexahydrophthalsäure und die von diesen abgeleiteten höhermolekularen Epoxidharze mit einem spezifischen Epoxidgruppengehalt von 100 bis 20 000 mmol/kg, bevorzugt von 1000 bis 10 000 mmol/kg, sowie Glycidyläther von Phenol- und Kresol-Novolaken; besonders bevorzugt werden handelsübliche aromatische Diepoxidharze auf Basis von Bisphenol A oder Bisphenol F mit einem spezifischen Epoxidgruppen-Gehalt von 2000 bis 6700 mmol/kg ("Epoxidäquivalentgewicht, EV" = molare Masse geteilt durch die Anzahl der Epoxidgruppen pro Molekül von 150 bis 500 g/mol) oder auch Diglycidyläther von Alkandiolen wie z. B. 1,4-Butandiol oder 1,6-Hexandiol sowie von Polypropylenglykolen mit einem spezifischen Epoxidgruppen-Gehalt von 500 bis 5000 mmol/kg ("Epoxidäquivalentgewicht" von 200 bis 2000 g/mol) eingesetzt. Die Epoxidharze können sowohl allein, als auch in Mischung verwendet werden.

Unter den Isocyanaten sind besonders die als Vernetzungsmittel gebräuchlichen diund mehrfunktionellen Isocyanate wie Hexamethylendiisocyanat, Trimethylhexamethylendiisocyanat, Isophorondiisocyanat, Tetramethylxylylendiisocyanat, 4,4'-Dicyclohexylmethandiisocyanat, Toluylendiisocyanat, 4,4'-Diphenylmethandiisocyanat sowie die von diesen abgeleiteten Allophanate, Biurete und Uretdione mit Vorteil einsetzbar. Besonders bevorzugt werden aliphatische und aromatische difunktionelle Isocyanate.

Die auf diese Art hergestellten Ketimine sind zur Abmischung mit dem wasserverdünnbaren Epoxidharz fertig.

In Kombination mit wasserverdünnbaren Epoxidharzen ergeben die so hergestellten Härter Filme mit einer guten Oberflächenqualität und guten Allround-Eigenschaften. Ein Lösungsmittelzusatz ist, wenn überhaupt, zur zum Einstellen einer niedrigeren Viskosität des 1K-Systems erforderlich. Insgesamt erlauben es die neuen Systeme, mit geringeren Lösungsmittelmengen zu arbeiten, als mit Systemen auf Polyamidoamin-Basis. Unter den wasserverdünnbaren Epoxidharzen sind im Rahmen der Erfindung die selbst-emulgierenden Epoxidharze besonders gut geeignet, die durch chemischen Einbau von hydrophilen Segmenten in das Epoxidharz hergestellt werden. Dabei sind besonders solche Epoxidharze bevorzugt, die durch Einbau von Polyoxyäthylen-Segmenten hydrophilisiert sind.

Die erfindungsgemäßen, wasserverdünnbaren, einkomponentigen Epoxid-Flüssigharzsysteme finden vor allem Anwendung als farblose Grundierung sowie als Beschichtungsmittel für pigmentierte Deckbeschichtung in Dünn- und Dickbeschichtungen für glatte und poröse Substrate, insbesondere für mineralische Untergründe, d. h. auf Putz, Beton, Mauerwerk, Estrich und in wasserverdünnter Form als Imprägnierung für saugende Untergründe. Besonders geeignet sind sie für Spachtel und Mörtelbeläge auf mineralischen Untergründen, zum Beispiel als Modifikatoren für mineralische Spachtelbeläge und Estriche (Zement, Anhydrit, Magnesit-Estriche). Ebenfalls geeignet sind diese Flüssigharz-Systeme zur Herstellung von Beschichtungen auf Holz-, Metall- (Eisen- und Nichteisen-Metall-) und KunststoffOberflächen.

Gegebenenfalls können der Formulierung noch Verdünner, Reaktivverdünner und Füllstoffe zugegeben werden.

Als Verdünner eignen sich vor allem solche, die Äther- und/oder Hydroxylgruppen enthalten und damit mit wasserhaltigen Systemen gut verträglich sind, wie z. B. aliphatische Alkohole mit 1 bis 10 Kohlenstoffatomen wie Äthanol, Propanol, Isopropanol, n-Butanol, Isobutanol, 2-Butanol, Methoxypropanol, Äthoxypropanol, Butoxypropanol, araliphatische Alkohole wie Phenoxyäthanol, Phenoxypropanol, 1-Phenyläthanol, 2-Phenyläthanol, 3-Phenylpropanol und Benzylalkohol.

Als Reaktivverdünner kommen z. B. in Frage: Butylglycidyläther, Phenylglycidyläther, Kresylglycidyläther, Monoglycidyläther von Fettalkoholen mit 8 bis 18 Kohlenstoffatomen, 2-Äthylhexyl-Glycidyläther und Glycidylester sogenannter Versatic-Säuren®, das sind in $\alpha$-Stellung zur Carbonsäuregruppe hoch verzweigte aliphatische Monocarbonsäuren, die zum Beispiel von Shell Chemicals vertrieben werden.

Geeignete Pigmente und Füllstoffe sind u. a. Silikate wie z. B. Talkum, Siliciumdioxid in verschiedenen Formen (Quarzsand, Quarzmehl), Titandioxid, Zinksulfid-Pigmente, Gips, Blanc fixe, Eisenoxidpigmente wie Eisenoxidschwarz und Eisenoxidgelb sowie Chromoxidgrün. Weitere geeignete Füllstoffe sind Glas(hohl)kugeln, Kunststoff- und Gummi-Granulate, Effekt-Zusätze wie Perlglanzpigmente und farbige Kunststoff-Chips. Vorteilhaft ist die Verwendung von Rohstoffen mit einem Minimum an Wasser (Restfeuchte).

In den nachfolgenden Beispielen bedeuten ebenso wie im vorhergehenden Text alle Angaben mit der Einheit "%", Massenanteile, soweit nicht anders angegeben. "Teile" sind stets Massenteile. Konzentrationsangaben in "%" sind Massenanteile des gelösten Stoffes in der Lösung. Die anderen in den Beispielen und im beschreibenden Text gebrauchten physikalischen Größen sind wie folgt definiert:

Die Aminzahl ist gemäß DIN 53 176 definiert als der Quotient derjenigen Masse $m_{KOH}$ an Kaliumhydroxid, die genausoviel Säure zur Neutralisation verbraucht wie eine zu untersuchende Probe, und der Masse $m_B$ dieser Probe (Masse des Feststoffes in der Probe bei Lösungen oder Dispersionen); ihre übliche Einheit ist "mg/g".

Der spezifische Epoxidgruppengehalt $SEG$ ist der Quotient aus der Stoffmenge an Epoxidgruppen $n(EP)$ und der Masse $m$ des Epoxids (bei Lösungen oder Dispersionen stets Masse des gelösten oder dispergierten Epoxid-Harzes):

$$SEG = \frac{n(EP)}{m}$$

4

die üblicherweise verwendete Einheit ist "mmol/kg". Das "Epoxidäquivalentgewicht" (abgekürzt "EEW" oder auch "Epoxid-Äquivalent", abgekürzt "EV-Wert") ist der Kehrwert des *SEG* und ist definiert als der Quotient der (zahlenmittleren) molaren Masse des betreffenden Epoxids und der mittleren Anzahl der Epoxid-Gruppen pro Molekül.

Der spezifische Aminwasserstoff-Gehalt *SHG* ist der Quotient aus der Stoffmenge an Aminwasserstoff-Atomen *n*(H) und der Masse *m* des Stoffes (bei Lösungen oder Dispersionen stets Masse des gelösten oder dispergierten Stoffes):

$$SHG = \frac{n(H)}{m}$$

die üblicherweise verwendete Einheit ist "mmol/kg". Das "Aminwasserstoff-Äquivalentgewicht" oder "(Amin-)H-Aktiv-Äquivalentgewicht"(abgekürzt "HAV-Wert") oder auch "Aminwasserstoff-Äquivalent", abgekürzt "HAV", ist der Kehrwert des *SHG* und ist definiert als der Quotient der (zahlenmittleren) molaren Masse des betreffenden Amins und der mittleren Anzahl der Aminwasserstoff-Atome Molekül.

Die folgenden Beispiele sollen die Erfindung verdeutlichen, ohne durch ihre Auswahl einschränkend zu wirken.

**Wasseremulgierbare Epoxid-Flüssigharze**

**Fremdemulgiert, E1**

Eine Mischung aus 910 g Beckopox® EP 116 (Epoxidharz der Vianova Resins GmbH mit einem spezifischen Epoxidgruppengehalt von 5560 mmol/kg (Epoxidäquivalentgewicht EV von 180 g/mol) auf Basis Bisphenol A/F), 39 g Simulsol® M 53 (mit 50 mol Äthylenoxid äthoxylierte Stearinsäure, Hersteller Seppic, Frankreich), 20 g Simulsol® 1030 NP (mit 10 mol Äthylenoxid äthoxyliertes Nonylphenol, Hersteller Seppic, Frankreich) und 25 g Octarox® 4030 (mit 40 mol Äthylenoxid äthoxyliertes Octylphenol, Hersteller Seppic, Frankreich) wurde bei 70 °C homogenisiert.

| spezifischer Epoxidgruppengehalt | 5076 mmol/kg |
|---|---|
| (Epoxidäquivalent | 197 g/mol) |
| Viskosität | 800 mPa·s bei 25 °C |

**Selbstemulgierbar, E2**

389 g eines Diglycidyläthers von Bisphenol A mit einem spezifischen Epoxidgruppengehalt von 5405 mmol/kg (einem EV-Wert von 185 g/mol; Beckopox® EP 140 der Vianova Resins GmbH) wurden mit 311 g Polyäthylenglykol der mittleren molaren Masse 2000 g/mol in einer Stickstoffatmosphäre auf 125 °C geheizt. Unter gutem Rühren wurde 1,5 g eines BF$_3$-Aminkomplexes als Katalysator zugefügt (Anchor® 1040 der Firma Anchor). Während vier Stunden wurde dann die Temperatur kontinuierlich auf 150 °C erhöht. Der spezifische Epoxidgruppen-Gehalt betrug nun 2380 bis 2410 mmol/kg (EV 415 bis 420 g/mol). Der Ansatz erstarrte bei Raumtemperatur zu einer wachsartig-kristallinen Masse.

175 g Diglycidyläther von Bisphenol **F** mit einem spezifischen Epoxidgruppen-Gehalt von 5710 bis 6061 mmol/kg (EV 165 bis 175 g/mol, Epikote® 862, Shell Chemicals) und 325 g Diglycidyläther von Bisphenol A (Beckopox® EP 140, Vianova Resins GmbH) wurden bei Raumtemperatur homogenisiert. Zu der homogenen Mischung wurden 68,2 g des obengenannten Emulgators (12 % bezogen auf Gesamtmasse) zugesetzt, anschließend wurde bei 70 °C während zwei Stunden unter Stickstoff homogenisiert.

| spezifischer Epoxidgruppen-Gehalt | 5128 mmol/kg |
|---|---|
| (Epoxidäquivalentgewicht | 195 g/mol) |
| Viskosität | 4800 mPa·s bei 25 °C |

**Ketimine**

**Beispiel H1:** (Umsetzung der Ketimin-Vorstufe mit Epoxidharz)

116 g (1,0 mol) Hexamethylendiamin und 150 g Toluol wurden unter Rühren auf 40 °C erwärmt. Innerhalb 1 Stunde wurde 88 g (1,0 mol) Äthylencarbonat zugefügt, wobei sogleich eine exotherme Reaktion einsetzte. Durch Kühlen wurde während der Zugabe die Temperatur auf maximal. 50 °C gehalten. Anschließend wurde so lange bei 50 °C nachgerührt, bis eine Aminzahl von 158 mg/g erreicht war. Anschließend wurden 144 g (2,0 mol) Methyläthylketon und 0,5 g p-Toluolsulfonsäure, als Katalysator für die Ketiminbildung, zugesetzt und unter beginnendem Abscheiden von Wasser auf Rückflußtemperatur erhitzt. Nach dem Abscheiden von 110 % der theoretischen Wassermenge (ca. 20 g) wurde zunächst bei Normaldruck, dann bei 50 mbar das Lösungsmittelgemisch abdestilliert. Bei 90 °C wurden dann innerhalb von 30 min 114 g (0,5 mol) eines Diepoxidharzes auf Basis von Polypropylenglykol (spezifischer Epoxidgruppen-Gehalt ca. 3125 mmol/kg, EV ca. 320 g/mol) zugefügt, unter Ausnutzung der auftretenden leichten Exothermie wurde auf 120 °C erwärmt und bei dieser Temperatur so lange gehalten, bis ein spezifischer Epoxidgruppen-Gehalt von unter 50 mmol/kg erreicht war (Epoxidäquivalentgewicht von > 20 000 g/mol).

**Beispiel H2: (Umsetzung der Ketimin-Vorstufe mit Isocyanat)**

Bis zum Abdestillieren des Lösungsmittelgemisches bei 50 mbar wurde wie in Beispiel H1 verfahren. Bei 90 °C wurde innerhalb von 30 min 105 g (0,5 Mol) Trimethylhexamethylendiisocyanat zugegeben, wobei die Temperatur durch Exothermie bis auf 120 °C stieg. Bei dieser Temperatur wurde so lange gehalten, bis ein NCO-Gehalt von praktisch 0 % erreicht war.

**Beispiele H3 bis H11:**

In gleicher Weise wie im Beispiel H1 bzw. H2 wurden entsprechend den Angaben in der Tabelle 1 weitere Bindemittel hergestellt.

In der Tabelle werden folgende Abkürzungen verwendet:

EP 1:    Diepoxidharz auf Basis von Bisphenol A       (SEG ca. 2100 mmol/kg; EEW ca. 475 g/mol)
EP 2:    Diepoxidharz auf Basis von Bisphenol A       (SEG ca. 5260 mmol/kg; EEW ca. 190 g/mol)
EP 3:    Diepoxidharz auf Basis von Polypropylenglykol       (SEG ca. 3100 mmol/kg; EEW ca. 320 g/mol)
EP 4:    Diepoxidharz auf Basis von 1,6 Hexandiol       (SEG ca. 8700 mmol/kg; EEW ca. 115 g/mol)

MEK:    Methyläthylketon
DEK:    Diäthylketon
DIK:    Diisopropylketon

MXDA:       meta-Xylylendiamin
ED:       Äthylendiamin
DCH:       1,2-Diaminocyclohexan
HMDA:       1,6-Hexamethylendiamin
IPDA:       Isophorondiamin
DADCH:    4,4'-Diaminodicyclohexylmethan

THMDI:    Trimethylhexamethylendiisocyanat
TDI:       Toluylendiisocyanat
HMDI:    1,6-Hexamethylendiisocyanat

Tabelle 1

| Bei-spiel | Amin | | | Äthylencarbonat | | Keton | | |
|---|---|---|---|---|---|---|---|---|
| | Masse | Stoffmenge | Art | Masse | Stoffmenge | Masse | Stoffmenge | Art |
| | g | mol | | g | mol | g | mol | |
| H1 | 116 | 1,0 | HMDA | 88 | 1,0 | 144 | 2,0 | MEK |
| H2 | 116 | 1,0 | HMDA | 88 | 1,0 | 144 | 2,0 | MEK |
| H3 | 60 | 1,0 | ED | 88 | 1,0 | 129 | 1,5 | DEK |
| H4 | 68 | 0,5 | MXDA | 62 | 0,7 | 251 | 2,2 | DIK |
| | 85 | 0,5 | IPDA | | | | | |
| H5 | 68 | 0,5 | MXDA | 44 | 0,5 | 158 | 2,2 | MEK |
| | 105 | 0,5 | DADCH | | | | | |
| H6 | 68 | 0,5 | MXDA | 70 | 0,8 | 189 | 2,2 | DEK |
| | 57 | 0,5 | DCH | | | | | |
| H7 | 136 | 1,0 | MXDA | 53 | 0,6 | 180 | 2,5 | MEK |
| H8 | 95 | 0,7 | MXDA | 70 | 0,8 | 206 | 2,4 | DEK |
| | 63 | 0,3 | DADCH | | | | | |
| H9 | 57 | 0,5 | DCH | 88 | 1,0 | 144 | 2,0 | MEK |
| | 30 | 0,5 | ED | | | | | |
| H10 | 95 | 0,7 | MXDA | 18 | 0,2 | 399 | 3,5 | DIK |
| | 34 | 0,3 | DCH | | | | | |
| H11 | 168 | 0,8 | DADCH | 53 | 0,6 | 194 | 2,7 | MEK |
| | 23 | 0,2 | HMDA | | | | | |

## Fortsetzung Tabelle 1

| Bei-spiel | Epoxidharz | | | Isocyanat | | | Festharz* | Aminzahl | HAV[#] | SHG[#] |
|---|---|---|---|---|---|---|---|---|---|---|
| | Masse | Stoffmenge | Art | Masse | Stoffmenge | Art | Masse | | | |
| | g | mol | | g | mol | | g | mg/g | g/mol | mmol/kg |
| H1 | 320 | 0,5 | EP 3 | -- | -- | -- | 596 | 94 | 298 | 3356 |
| H2 | -- | -- | -- | 105 | 0,5 | THMDI | 381 | 147 | 190 | 5263 |
| H3 | 64 | 0,1 | EP 3 | -- | -- | -- | 678 | 82 | 339 | 2950 |
| | 380 | 0,4 | EP 1 | | | | | | | |
| H4 | 332 | 0,35 | EP 1 | -- | -- | -- | 695 | 105 | 267 | 3745 |
| H5 | 237 | 0,25 | EP 1 | -- | -- | -- | 562 | 149 | 187 | 5348 |
| H6 | -- | -- | -- | 67 | 0,4 | HMDI | 365 | 184 | 152 | 6579 |
| H7 | -- | -- | -- | 52 | 0,3 | TDI | 342 | 229 | 122 | 8197 |
| H8 | 76 | 0,2 | EP 2 | 34 | 0,2 | HMDI | 441 | 152 | 184 | 5435 |
| H9 | 192 | 0,3 | EP 3 | -- | -- | -- | 515 | 109 | 257 | 3891 |
| | 76 | 0,2 | EP 2 | | | | | | | |
| H10 | 95 | 0,1 | EP 1 | -- | -- | -- | 447 | 225 | 124 | 8065 |
| H11 | 69 | 0,3 | EP 4 | -- | -- | -- | 414 | 189 | 148 | 6757 |

\*: abzüglich Ketonüberschuß

#: SHG: spezifischer Gehalt an Aminwasserstoff-Atomen, s. Definition im Text

HAV: "Amin-Wasserstoff-Äquivalent, Kehrwert des SHG, s. Definition im Text

Die vorstehend beschriebenen, in Tabelle 1 aufgelisteten Ketimin-Härter, wurden so mit den wasserverdünnbaren Epoxidharzen gemischt.

Die wasserfreien, aber wasserverdünnbaren Harze wurden im Stoffmengen-Verhältnis 0,8 bis 1,2 mol der Epoxidgruppen zu 1,0 mol des Amin-Wasserstoffs im freizusetzenden Amin gemischt. Unmittelbar vor der Applikation wurde durch Zugabe einer (zur Zersetzung des Ketimins) ausreichenden Wassermenge der aminische Härter freigesetzt. Je nach der Reaktivität und der Umgebungstemperatur betrug die Topfzeit dann bis zu 24 Stunden, mindestens jedoch 2 Stunden.

Die typische Topfzeit dieser Systeme ist 4 bis 12 Stunden. Zusätzlich kann eine weitere Wassermenge zugesetzt werden, vorzugsweise im Massenverhältnis von Wasser zu Harz-Härter-Gemisch von 1 : 20 bis 20 : 1, bevorzugt 1 : 10 bis 10 : 1, besonders bevorzugt 1 : 5 bis 5 : 1. Es ist jedoch, vor allem auf feuchten Untergründen und bei niedrigen Schichtdicken, auch möglich, das Gemisch ohne Wasserzusatz auf dem Substrat aufzubringen. Bei trockenem Untergrund und niedriger Luftfeuchtigkeit ist diese Arbeitsweise aber ungünstig.

## Anwendungstechnische Prüfung

Für einen anwendungstechnischen Vergleich wurden Systeme wie in Tabelle 2 angegeben formuliert. Das Mischungsverhältnis Epoxidharz/Härter entsprach dabei jeweils der Stöchiometrie (1 mol Epoxidgruppen auf 1 mol Aminwasserstoff). Kurz vor der Applikation wurden die Systeme durch Zugabe von Wasser "gestartet". Als Vergleich diente ein in WO-A 98/02478 beschriebener Ketimin-Härter auf Basis von Laromin® C 260, BASF AG, verkappt durch Umsetzung mit 3-Pentanon (in Tabelle 2 mit V bezeichnet). Die ausgehärteten Lackfilme zeichneten sich durch einen guten Oberflächenverlauf aus. Als wasserverträgliches Lösungsmittel zum Einstellen der Lackviskosität bzw. zum Verbessern des Filmverlaufes beim Vergleichshärter diente Methöxypropanol (MP). Der Lösungsmittelbedarf der neuen Formulierungen war deutlich reduziert.

Die Ergebnisse der Prüfung sind in Tabelle 2 zusammengefaßt. Bei dünn aufgetragenen Beschichtungen war die Zugabe von Wasser nicht unbedingt erforderlich, beschleunigte aber die Reaktion.

Durch Zugabe geeigneter Katalysatoren sind schneller härtende Systeme zugänglich. Als Katalysatoren eignen sich z. B. tertiäre Amine wie Benzyldimethylamin oder Säuren wie Salizylsäure und p-Toluolsulfonsäure. Der Katalysator wird am besten erst unmittelbar bei der Lackformulierung, z. B. gemeinsam mit dem Wasser, zugegeben, andernfalls würde die Lagerstabilität des 1 K-Systems vermindert werden.

Tabelle 2

| Beispiel | Härter | | Epoxid-Harz | | Wasser | MP | Lack |
|---|---|---|---|---|---|---|---|
| | Masse | Art | Masse | Art | Masse | Masse | Masse |
| | g | | g | | g | g | g |
| 1 | 76 | H1 | 50 | E1 | 14 | 10 | 150 |
| 2 | 76 | H1 | 50 | E2 | 14 | 8 | 148 |
| 3 | 48 | H2 | 50 | E1 | 10 | 7 | 115 |
| 4 | 49 | H2 | 50 | E2 | 10 | 7 | 116 |
| 5 | 86 | H3 | 50 | E1 | 15 | 15 | 166 |
| 6 | 68 | H4 | 50 | E1 | 13 | 10 | 141 |
| 7 | 47 | H5 | 50 | E1 | 10 | 5 | 112 |
| 8 | 38 | H6 | 50 | E1 | 9 | 5 | 102 |
| 9 | 31 | H7 | 50 | E1 | 9 | 5 | 95 |
| 10 | 47 | H8 | 50 | E1 | 10 | 7 | 114 |
| 11 | 65 | H9 | 50 | E1 | 12 | 8 | 135 |
| 12 | 31 | H10 | 50 | E1 | 8 | 0 | 89 |
| 13 | 37 | H11 | 50 | E1 | 9 | 0 | 96 |
| Vergleich | 24 | V | 50 | E1 | 9 | 18 | 101 |

Fortsetzung Tabelle 2

| Beispiel | Massen-anteil MP im Lack % | Potlife (Verarbei-tungszeit) h | Trocknungszeit (staubtrocken) h | Trocknungs-zeit (klebfrei) h | Ver-lauf | Film-trübung | Wasserfestigkeit nach 24 h |
|---|---|---|---|---|---|---|---|
| 1 | 6,7 | 6 | >12 | >12 ; <24 | 1-2 | 1 | 1 |
| 2 | 5,4 | 6 | >12 | >12; <24 | 1 | 0 | 0 |
| 3 | 6,0 | 6 | >12 | >12; <24 | 1 | 1 | 1 |
| 4 | 6,0 | 6 | >12 | >12; <24 | 1 | 0 | 1 |
| 5 | 9,0 | 5 | 8 | 12 | 1 | 0 | 0 |
| 6 | 7,1 | 6 | 6 | 10 | 0 | 0 | 0 |
| 7 | 4,5 | 7 | 6,5 | 10 | 1 | 0 | 0 |
| 8 | 4,9 | 7 | 8 | 12 | 1 | 0 | 1 |
| 9 | 5,3 | 4 | 5,5 | 9 | 1 | 0 | 0 |
| 10 | 6,1 | 5 | 7 | 10 | 0 | 0 | 0 |
| 11 | 5,9 | 6 | 8 | 12 | 1 | 0 | 1 |
| 12 | 0 | 5 | 6 | 9 | 1 – 2 | 1 | 1 |
| 13 | 0 | >8 | 12 | >12;<24 | 1 | 0 | 1 |
| Vergleich | 17,8 | 6 | 12 | >12;<24 | 3 | 3 | 1 |

Als Beispiel für eine nicht pigmentierte Grundierung dienten Formulierungen wie in Tabelle 2 angegeben.

Die Produktion der vorgenannten Rezepturen kann auf unterschiedliche Art erfolgen. So können alle Rezepturbestandteile mit Ausnahme der Ketimine in einem gebräuchlichen Produktionsbehälter vermischt werden. Zur Herstellung pigmentierter Versionen kann in gleicher Weise wie bei den unpigmentierten Versionen verfahren werden. Das Anreiben der Pigmente und Füllstoffe erfolgt dabei in reinem Epoxidharz ohne die Ketimine. Alternativ dazu kann eine Pigmentpaste eingesetzt werden. Das Abfüllen der so hergestellten Produkte sollte unter Ausschluß von Luftfeuchtigkeit erfolgen. Vor dem Verschließen der Gebinde ist das Spülen mit trockenem Stickstoff oder trockener Luft vorteilhaft. Die Applikation der genannten Produkte kann durch Gießen, Tauchen oder Fluten oder durch Verwendung herkömmlicher Hilfsmittel wie Pinsel, Rolle, Rakel, Spachtel, Druckluftspritzgeräte oder Airless-Spritzgeräte erfolgen. In der Regel sollen insbesondere die Pigment- und Füllstoff-haltigen Formulierungen vor Gebrauch aufgerührt werden. Die Zugabe von Wasser sollte bei langsam laufendem Rührwerk erfolgen und das Material für mindestens drei Minuten gut gemischt werden. Geeignete Untergründe sind unter anderem Holz, alle mineralischen Untergründe, die bekannten Kunststoffe, insbesondere auch Kunststoffe auf Basis Polyadditions-Polymeren und Metalle wie zum Beispiel Aluminium, Aluminium- und andere Leichtmetall-Legierungen, Eisen, verzinktes Eisen, Edelstahl und Messing. Die Aushärtung der Beschichtungen kann bei Raumtemperatur abgewartet oder durch zusätzliche Wärmeeinwirkung bis 150 °C beschleunigt werden. Eine weitere Möglichkeit der Beschleunigung der Härtung ist das Durchlaufen von dampfbeheizten Trocknungsanlagen.

**verwendete Testmethoden:**

Die Viskosität wird in einem handelsüblichen Kegel-Platte-Viskosimeter in der üblichen Weise ermittelt. Das Ende der Verarbeitungszeit (potlife) ist erreicht, wenn die Harzdispersion im Vorratsgefäß bereits abgebunden hat (vernetzt ist).

**Verlauf:** Nach Applikation auf eine Glasplatte (Trockenfilmstärke 50 μm) visuelle Beurteilung der Oberfläche nach einer Trockenzeit von 24 h bei Umgebungstemperatur. Kennwerte 0 bis 5:

0    glatt, glänzend

1 leicht wellig, glänzend
2 mäßig wellig, glänzend
3 mäßig wellig, matt
4 stark strukturiert, matt
5 stark strukturiert, rauh, inhomogen

**Filmtrübung:** Nach Applikation auf eine Glasplatte (w.o.) visuelle Beurteilung der Oberfläche nach einer Trockenzeit von 24 h bei Umgebungstemperatur. Kennwerte 0 bis 5:

0 klar
1 leicht opak
2 leichte, milchige Trübung
3 mäßige, milchige Trübung
4 starke, milchige Trübung
5 sehr starke Trübung, inhomogen

**Wasserfestigkeit:** Nach Applikation auf eine Glasplatte (w.o.) wird nach 7 Tagen Trockenzeit bei Umgebungstemperatur ein wassergetränkter Wattebausch aufgelegt. Um vorzeitiges Austrocknen zu vermeiden, wird mit einer umgedrehten Glasschale abgedeckt. Nach 24 h wird der noch nasse Wattebausch entfernt und eine Veränderung der Oberfläche visuell beurteilt. Kennwerte 0 bis 5:

0 keine Veränderung
1 leichte Runzelbildung, keine Eintrübung
2 mäßige Runzelbildung, leichte Eintrübung
3 starke Runzelbildung, mäßige Eintrübung
4 Risse, Blasen, starke Eintrübung
5 Filmzerstörung - Risse, Abplatzungen

## Patentansprüche

1. Verkappte Aminhärter für Epoxidharze, die Umsetzungsprodukte sind von Aminen **A** mit mindestens zwei primären Aminogruppen, cyclischen Alkylencarbonaten **B**, aliphatischen Carbonylverbindungen **C** und Verbindungen **D** mit mindestens zwei mit Hydroxylgruppen reagierenden Gruppen, wobei im ersten Schritt je 1 mol des Amins **A** 0,1 bis 1 mol der primären Aminogruppen durch Reaktion mit den cyclischen Alkylencarbonaten **B** zu Hydroxyalkylurethan-Gruppen umgewandelt werden, die verbliebenen primären Aminogruppen im zweiten Schritt durch Reaktion mit den aliphatischen Carbonylverbindungen **C** zu Ketimin- oder Aldimin-Gruppen umgewandelt werden und anschließend im dritten Schritt mindestens zwei der aus **A, B** und **C** gebildeten Moleküle über die Hydroxylgruppen der Hydroxyalkylurethan-Gruppierung durch Reaktion mit der Verbindung **D** verknüpft werden.

2. Verkappte Aminhärter nach Anspruch 1, **dadurch gekennzeichnet, daß** als Amine **A** diprimäre Amine eingesetzt werden.

3. Verkappte Aminhärter nach Anspruch 2, **dadurch gekennzeichnet, daß** die Amine **A** ausgewählt sind aus Äthylendiamin, Hexamethylendiamin, 1,2-Diaminocyclohexan, Isophorondiamin, Bis(4-aminocyclohexyl)-methan sowie 1,3-Bis(aminomethyl)-benzol.

4. Verkappte Aminhärter nach Anspruch 1, **dadurch gekennzeichnet, daß** die Verbindung **B** ausgewählt ist aus cyclischen Carbonaten abgeleitet von Äthylenglykol, 1,3 -propylenglykol und 1,4-Butandiol.

5. Verkappte Aminhärter nach Anspruch 1, **dadurch gekennzeichnet, daß** die Carbonylverbindung **C** ausgewählt ist aus Methyläthylketon, Diäthylketon und Diisopropylketon.

6. Verkappte Aminhärter nach Anspruch 1, **dadurch gekennzeichnet, daß** die Verbindungen **D** ausgewählt sind aus Diepoxidharzen auf Basis von Bisphenol **A**, Polypropylenglykol und 1,6-Hexandiol, jeweils mit einem spezifischen Epoxidgruppen-Gehalt von 1000 bis 10 000 mmol/kg.

7. Verkappte Aminhärter nach Anspruch 1, **dadurch gekennzeichnet, daß** die Verbindungen **D** ausgewählt sind aus 1,6-Diisocyanatohexan (Hexamethylendüsocyanat), Isophorondiisocyanat, Diphenylmethandiisocyanat, meta-Xylylendiisocyanat und Toluylendiisocyanat.

8. Verfahren zur Herstellung von verkappten Aminhärter nach Anspruch 1, **dadurch gekennzeichnet, daß** in der ersten Stufe das Amin A mit einem aliphatischen 2-Oxo-1,3-dioxolan **B** zu einem β-Hydroxyurethan **AB** umgesetzt wird, in der zweiten Stufe die verbliebenen Aminogruppen des Produktes der ersten Stufe mit einer Carbonylverbindung **C** zu den entsprechenden Aldiminen oder Ketiminen **ABC** umgesetzt werden, und anschließend in der dritten Stufe jeweils mindestens zwei Moleküle **ABC** über die Hydroxylgruppen der β-Hydroxyurethan-Gruppierung durch Reaktion mit der Verbindung **D** verknüpft werden.

9. Wasserverdünnbare Einkomponenten-Epoxidharz-Zusammensetzungen, enthaltend ein wasserverdünnbares Epoxidharz und verkappte Aminhärter nach Anspruch 1.

10. Wasserverdünnbare Einkomponenten-Epoxidharz-Zusammensetzungen nach Anspruch 9, **dadurch gekennzeichnet, daß** das Epoxidharz durch Einbau von Segmenten mit wiederholenden Oxyäthylen-Einheiten in Wasser selbstemulgierend ist.


**Claims**

1. A capped amine hardener for epoxy resins which is a reaction product of amines **A** having at least two primary amino groups, cyclic alkylene carbonates **B**, aliphatic carbonyl compounds **C** and compounds **D** having at least two groups which react with hydroxyl groups, where in the first step, for each 1 mol of the amine **A**, 0.1 to 1 mol of the primary amino groups are converted into hydroxyalkylurethane groups by reaction with the cyclic alkylene carbonates **B**, in the second step the remaining primary amino groups are converted into ketimine or aldimine groups by reaction with the aliphatic carbonyl compounds **C**, and subsequently, in the third step, at least two of the molecules formed from **A, B** and **C** are linked via the hydroxyl groups of the hydroxyalkylurethane group by reaction with the compound **D**.

2. A capped amine hardener as claimed in claim 1, wherein di-primary amines are used as amine **A**.

3. A capped amine hardener as claimed in claim 2, wherein the amine **A** is selected from the group consisting of ethylene diamine, hexamethylene diamine, 1,2-diaminocyclohexane, isophorone diamine, bis(4-aminocyclohexyl) methane and 1,3-bis(aminomethyl)benzene.

4. A capped amine hardener as claimed in claim 1, wherein compound **B** is selected from the group consisting of cyclic carbonates derived from ethylene glycol, 1,3-propylene glycol and 1,4-butanediol.

5. A capped amine hardener as claimed in claim 1, wherein the carbonyl compound **C** is selected from the group consisting of methyl ethyl ketone, diethyl ketone and diisopropyl ketone.

6. A capped amine hardener as claimed in claim 1, wherein compound **D** is selected from the group consisting of diepoxy resins based on bisphenol **A**, polypropylene glycol and 1,6-hexanediol, each with a specific epoxide group content of 1 000 to 10 000 mmol/kg.

7. A capped amine hardener as claimed in claim 1, wherein the compound **D** is selected from the group consisting of 1,6-diisocyanatohexane (hexamethylene diisocyanate), isophorone diisocyanate, diphenylmethane diisocyanate, meta-xylylene diisocyanate and toluylene diisocyanate.

8. A process for preparing a capped amine hardener as claimed in claim 1, which comprises in the first stage reacting the amine **A** with an aliphatic 2-oxo-1,3-dioxolane **B** to give a β-hydroxyurethane **AB**, in the second stage reacting the remaining amino groups of the product of the first stage with a carbonyl compound **C** to give the corresponding aldimines or ketimines **ABC**, and subsequently, in the third stage, linking in each case at least two molecules **ABC** via the hydroxyl groups of the β-hydroxyurethane group by reaction with the compound **D**.

9. A water-dilutable monocomponent epoxy resin composition comprising a water-dilutable epoxy resin and capped amine hardener as claimed in claim 1.

**EP 0 957 121 B1**

**10.** A water-dilutable monocomponent epoxy resin composition as claimed in claim 9, wherein the epoxy resin is self-emulsifying in water due to incorporation of segments with repeating oxyethylene units.

**Revendications**

**1.** Durcisseurs aminés coiffés pour résines époxydes, qui sont des produits de réaction d'amines **A** présentant au moins deux groupes amino primaires, de carbonates d'alkylènes cycliques **B**, de composés carbonylés aliphatiques **C** et de composés D présentant au moins deux groupes réagissant sur les groupes hydroxyle, en transformant dans la première étape pour 1 mole de l'amine **A** de 0,1 à 1 mole des groupes amino primaires par les carbonates d'alkylènes cycliques **B** en groupe hydroxyalkyluréthannes, les groupes amino primaires n'ayant pas réagi sont transformés dans la deuxième étape par réaction sur les composés carbonylés aliphatiques **C** en groupes cétimines ou aldimines et finalement, en troisième étape, au moins deux des molécules formées à partir de **A, B** et **C** sont liées par les groupes hydroxyle du groupement hydroxyalkyluréthanne par réaction sur le composé **D**.

**2.** Durcisseurs aminés coiffés selon la revendication 1, **caractérisés en ce qu'**on utilise des amines diprimaires en tant qu'amines primaires **A**.

**3.** Durcisseurs aminés coiffés selon la revendication 2, **caractérisés en ce que** les amines **A** sont prises parmi l'éthylènediamine, l'hexaméthylènediamine, le 1,2-diaminocyclohexane, l'isophoronediamine, le bis(4-aminocyclohexyl)méthane ainsi que le 1,3-bis(aminométhyl)benzène.

**4.** Durcisseurs aminés coiffés selon la revendication 1, **caractérisés en ce que** le composé **B** est pris parmi les carbonates cycliques dérivant de l'éthylèneglycol, du 1,3-propylèneglycol et du 1,4-butanediol.

**5.** Durcisseurs aminés coiffés selon la revendication 1, **caractérisés en ce** le composé carbonylé est pris parmi la méthyléthylcétone, la diéthylcétone et la diisopropylcétone.

**6.** Durcisseurs aminés coiffés selon la revendication 1, **caractérisés en ce que** les composés **D** sont pris parmi les diépoxydes à base de bisphénol **A**, le polypropylèneglycol et le 1,6-hexanediol, chacun ayant une teneur spécifique en groupes époxydes de 1000 à 10000 mmoles/kg.

**7.** Durcisseurs aminés coiffés selon la revendication 1, **caractérisés en ce que** les composés **D** sont pris parmi le 1,6-diisocyanatohexane (hexaméthylènediisocyanate), l'isophoronediisocyanate, le diphénylméthanediisocyanate, le méta-xylylènediisocyanate et le toluylènediisocyanate.

**8.** Procédé pour la préparation de durcisseurs aminés coiffés selon la revendication 1, **caractérisé en ce qu'**on fait réagir dans la première étape l'amine **A** sur un 2-oxo-1,3-dioxolane aliphatique **B** pour obtenir un β-hydroxyuréthanne **AB**, on fait réagir dans la deuxième étape les groupes amino n'ayant pas réagi du produit de la première étape sur un composé carbonylé **C** pour obtenir les aldimines ou cétimines correspondantes **ABC**, et finalement, dans la troisième étape, on relie à chaque fois au moins deux molécules **ABC** par l'intermédiaire des groupes hydroxyle du groupement β-hydroxyuréthanne par réaction sur le composé **D**.

**9.** Compositions de résines époxydes à un composant diluables par l'eau, renfermant une résine époxyde diluable par l'eau et des durcisseurs aminés coiffés selon la revendication 1.

**10.** Compositions de résines époxydes à un composant diluables par l'eau selon la revendication 9, **caractérisées en ce que** la résine époxyde devient auto-émulsifiante dans l'eau par incorporation de segments avec des unités oxyéthylène répétitives.